# EUROPÄISCHE PATENTANMELDUNG

(11) **EP 2 546 021 A1**
(43) Veröffentlichungstag der Anmeldung: **16.01.2013**
(21) Anmeldenummer: 11173590.8
(22) Anmeldetag: 12.07.2011
(51) Int. Cl.: B23K 35/02, B23K 35/22, B23K 35/30, C22C 19/05

(54) **Nickelbasierte Legierung, Verwendung und Verfahren**

(71) Anmelder: Siemens Aktiengesellschaft, 80333 München (DE)
(72) Erfinder: Arjakine, Nikolai, 10555 Berlin (DE); Melzer-Jokisch, Torsten, 15366 Neuenhagen bei Berlin (DE); Ott, Michael, 45470 Mülheim an der Ruhr (DE); Piegert, Sebastian, 10777 Berlin (DE); Thomaidis, Dimitrios, 14197 Berlin (DE); Neidel, Andreas, 13053 Berlin (DE)

(57) **Zusammenfassung**

Die neue Legierung mit den Elementen Kohlenstoff (C), Chrom (Cr), Kobalt (Co), Molybdän (Mo), Wolfram (W), Titan (Ti), Aluminium (Al), Bor (B), Zirkon (Zr) auf Nickelbasis weist eine sehr geringe Neigung zur Rissbildung beim Schweißen auf.

## Beschreibung

Die Erfindung betrifft eine Nickelbasissuperlegierung, die insbesondere zum Schweißen verwendet werden kann.

Nickelbasierte Werkstoffe sind insbesondere von Turbinenschaufeln von Gasturbinen bekannt und weisen bei hohen Temperaturen hohe Festigkeiten auf. Ebenso müssen nickelbasierte Superlegierungen eine geringe Rissempfindlichkeit aufweisen, d.h. eine hohe Duktilität.

Die US 3,615,376 offenbart Rene 80.

Eine eben solche Eigenschaft wird auch von Legierungen gefordert, die zum Schweißen von nickelbasierten Superlegierungen verwendet werden. Oft entstehen in dem geschweißten Bereich Risse, was jedoch vermieden werden soll.

Es ist daher Aufgabe der Erfindung, o.g. Problem zu lösen.

Die Aufgabe wird gelöst durch eine Legierung gemäß Anspruch 1, eine Verwendung nach Anspruch 9 und ein Verfahren nach Anspruch 11.

In den Unteransprüchen sind weitere vorteilhafte Maßnahmen aufgelistet, die beliebig miteinander kombiniert werden können, um weitere Vorteile zu erzielen.

Die Legierung weist gute Eigenschaften bei hohen Temperaturen auf.

Ebenso ist sie als Schweißlegierung verwendbar, wobei dann die Reparaturmöglichkeiten von Bauteilen aus Rene 80 verbessert werden, die Ausschussquote verringert wird, die Schweißqualität insbesondere bei Handschweißung verbessert wird und auch beim automatisierten Verfahren zu einer Verringerung der Stückkosten führt. Bei Laser-Cladding-Verfahren kommt es vorteilhafterweise zum Einsatz für heißrissempfindliche zu schweißende Werkstoffe.

Außerdem ist kein Vorwärmen oder Überaltern von Bauteilen nötig, was beim Schweißen oft durchgeführt wird, so dass auch hier eine Kostenreduktion stattfindet, weil kein apparativer Aufwand betrieben werden muss und kein Zeitaufwand benötigt wird für eine Wärmebehandlung.

Dies ist möglich, da die geringen Anteile an Korngrenzenverfestiger in dieser Legierung als Schweißmaterial oder als Substrat die Rissgefahr beim Aufheizen und Abkühlen beim und während des Schweißens verringern, wodurch die Schweißbarkeit erhöht wird.

Es zeigen:
- Figur 1: eine Turbinenschaufel
- Figur 2: eine Brennkammer,

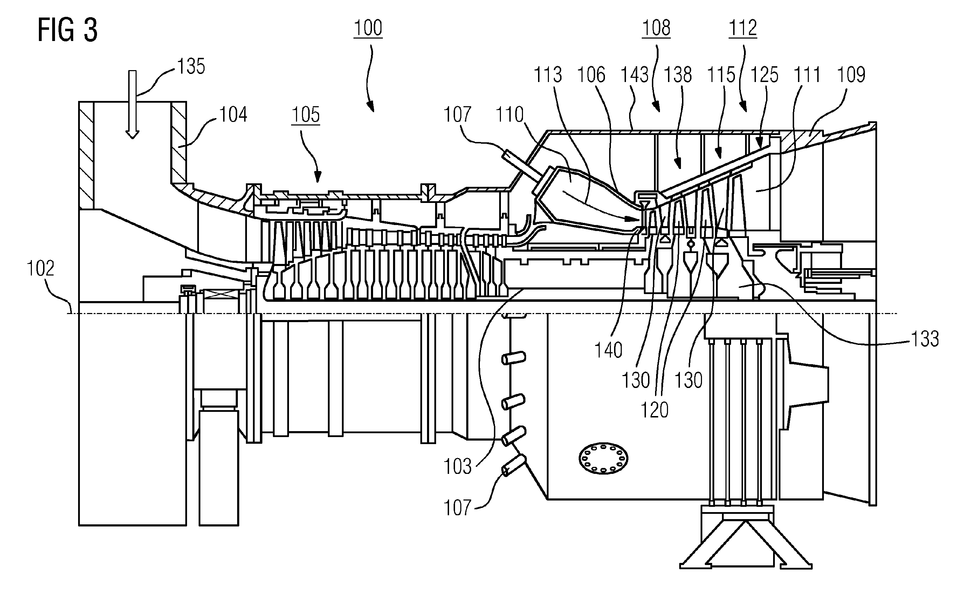

- Figur 3: eine Gasturbine,
- Figur 4: eine Liste von Superlegierungen.

Die Figuren und die Beschreibung stellen nur Ausführungsbeispiele der Erfindung dar.

Die nickelbasierte Legierung weist zumindest (in Gew.-%) auf:
Kohlenstoff (C) 0,13% - 0,2%
Chrom (Cr) 13,5% - 14,5%
Kobalt (Co) 9,0% - 10,0%
Molybdän (Mo) 1,5% - 2,4%
Wolfram (W) 3,4% - 4,0%
Titan (Ti) 4,6% - 5,0%
Aluminium (Al) 2,6% - 3,0%
Bor (B) 0,005% - 0,008%,
insbesondere Rest Nickel (Ni)
optional
Niob (Nb) max. 0,1%
Tantal (Ta) max. 0,1%
Zirkon (Zr) max. 0,05%,
insbesondere mindestens 0,02%,
Hafnium (Hf) max. 0,1%
Silizium (Si) max. 0,1%
Mangan (Mn) max. 0,1%
und Verunreinigungen,
insbesondere Phosphor (P), Eisen (Fe), Schwefel (S), Vanadium (V), Kupfer (Cu), Blei(Pb), Bismuth (Bi), Selen (Se) Tellur (Te), Thallium (Tl), Magnesium (Mg), Stickstoff (N), Silber (Ag).

Die Angabe "max" bedeutet, dass das Legierungselement meistens in der Legierung vorhanden ist und bis zum Maximalwert toleriert wird.

Verunreinigung bedeutet, dass der Anteil des/der Legierungselements/e zu minimieren ist/sind.

Auf Zusätze wie Tantal (Ta), Silizium (Si), Niob (Nb), Hafnium (Hf), Mangan (Mn) und/oder Rhenium (Re) kann vorteilhafter Weise verzichtet werden.

Vorzugsweise wird auf andere Schmelzpunkterniedriger verzichtet, dies sind auch Gallium (Ga) und/oder Germanium (Ge).

Durch die geringen Anteile von Bor und Molybdän bilden sich weniger Boride bzw. Carbide und Sulfide, die niedrigschmelzende Phasen auf den Korngrenzen bilden, die die Rissbildungen ansonsten fördern würden. So kann das Schweißverfahren, insbesondere Pulverschweißverfahren, bei Raumtemperatur durchgeführt werden.

Die Legierung kann als Substratmaterial für Hochtemperaturbauteile wie Turbinenbauteile verwendet werden.

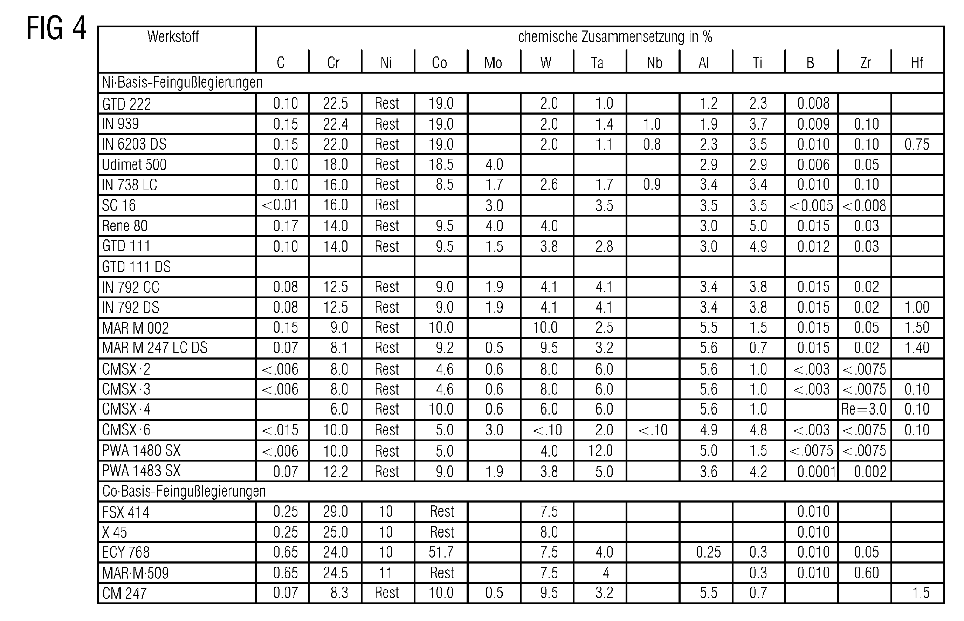

Ebenso kann die Legierung als Schweißlegierung von Substraten, insbesondere aus Rene 80 oder anderen nickelbasierten Superlegierungen, ganz insbesondere von Legierungen gemäß Figur 4 verwendet werden.

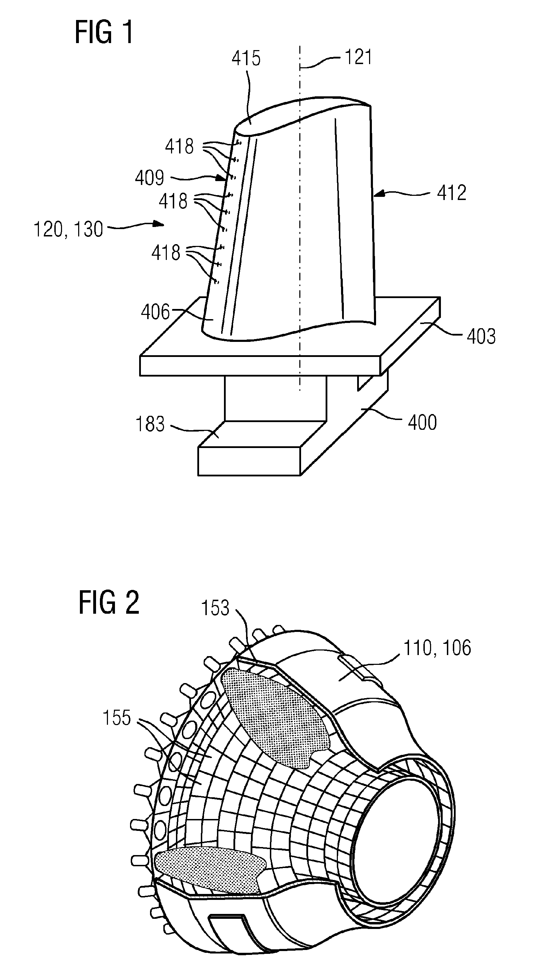

Die Figur 1 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0, 6Y-0, 7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0, 4Y-1, 5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 2 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Nickelbasierte Legierung,
die zumindest aufweist (in Gew.%) :
Kohlenstoff (C) 0,13% - 0,2%
Chrom (Cr) 13,5% - 14,5%
Kobalt (Co) 9,0% - 10,0%
Molybdän (Mo) 1,5% - 2,4%
Wolfram (W) 3,4% - 4,0%
Titan (Ti) 4,6% - 5,0%
Aluminium (Al) 2,6% - 3,0%
Bor (B) 0,005% - 0,008%,
insbesondere Rest Nickel (Ni)
optional
Niob (Nb) max. 0,1%
Tantal (Ta) max. 0,1%
Zirkon (Zr) max. 0,05%,
insbesondere mindestens 0,02%,
Hafnium (Hf) max. 0,1%
Silizium (Si) max. 0,1%
Mangan (Mn) max. 0,1%
und Verunreinigungen,
insbesondere Phosphor (P), Eisen (Fe), Schwefel (S),
Vanadium (V), Kupfer (Cu), Blei(Pb), Bismuth (Bi), Selen (Se) Tellur (Te), Thallium (Tl), Magnesium (Mg), Stickstoff (N), Silber (Ag),
und insbesondere aus diesen Legierungselementen besteht.

2. Nickelbasierte Legierung nach Anspruch 1, die zumindest aufweist (Werte in Gew.%, insbesondere ±5%) :
0,15% Kohlenstoff (C),
14,3% Chrom (Cr),
9,5% Kobalt (Co),
1,7% Molybdän (Mo),
3,7% Wolfram (W),
4,8% Titan (Ti),
2,8% Aluminium (Al),
0,0075% Bor (B),
optional 0,025% Zirkon (Zr),
insbesondere Rest Nickel (Ni),
ganz insbesondere aus Kohlenstoff, Chrom, Kobalt, Molybdän, Wolfram, Titan, Aluminium, Bor, Zirkon und Nickel besteht.

3. Legierung nach Anspruch 1 oder 2, die kein Niob (Nb) aufweist.

4. Legierung nach Anspruch 1, 2 oder 3, die kein Tantal (Ta) aufweist.

5. Legierung nach einem oder mehreren der Ansprüche 1, 2 oder 3, die kein Silizium (Si) oder kein Gallium (Ga) oder Germanium (Ge) aufweist.

6. Legierung nach einem oder mehreren der Ansprüche 1, 2, 3, 4 oder 5, die kein Hafnium (Hf) aufweist.

7. Legierung nach einem oder mehreren der Ansprüche 1, 2, 3, 4, 5 oder 6, die kein Mangan (Mn) aufweist.

8. Legierung nach einem oder mehreren der Ansprüche 1, 2, 3, 4, 5, 6 oder 7, die kein Rhenium (Re) aufweist.

9. Verwendung der Legierung nach einem oder mehreren der Ansprüche 1, 2, 3, 4, 5, 6, 7 oder 8, als Schweißlegierung für nickel- oder kobaltbasierte Legierungen.

10. Verwendung nach Anspruch 9, als Zusatzmaterial für die Schweißung von Rene 80.

11. Verfahren zum Reparieren eines Bauteils (120, 130, 155), bei dem eine Legierung gemäß einem oder mehreren der Ansprüche 1 bis 8 beim Schweißen eines nickel- oder kobaltbasierten Substrats (4) als Zusatzmaterial verwendet wird.

12. Verfahren nach Anspruch 11, bei dem keine Überalterung des Bauteils (120, 130, 155) vor dem Schweißen durchgeführt wird.

13. Verfahren nach Anspruch 11 oder 12, bei dem keine Vorwärmung des Bauteils (120, 130, 155) beim Schweißen erfolgt.

14. Verfahren nach einem oder mehreren Ansprüchen 11, 12 oder 13, bei dem Pulverauftragsschweißen durchgeführt wird.

15. Verfahren nach einem oder mehreren der Ansprüche 11, 12, 13 oder 14, das bei Raumtemperatur durchgeführt wird.

16. Verfahren nach einem oder mehreren der Ansprüche 11, 12, 13, 14 oder 15, bei dem Rene80 geschweißt wird.
